# EUROPEAN PATENT SPECIFICATION

(11) **EP 0 490 603 B1**
(45) Date of publication and mention of the grant of the patent: **17.04.1996**
(21) Application number: 91311409.6
(22) Date of filing: 09.12.1991
(51) Int. Cl.: G06K 7/10, G06K 7/14

(54) **Optical scanning apparatus for reading coded symbols**
Optischer Abtastapparat zum Lesen von verschlüsselten Symbolen
Appareil d'exploration optique pour lire des symboles codés

(30) Priority: 10.12.1990 US 625331
(43) Date of publication of application: 17.06.1992
(73) Proprietor: NCR INTERNATIONAL INC., Dayton, Ohio 45479 (US)
(72) Inventor: Doing, Park, Ithaca, New York 14850 (US); Carr, Donald William, c/o Cranbrook Academy of Art, Bloomfield Hills, Michigan 48303-0801 (US); Wike, Charles Kenneth, Jr., Cambridge, Ohio 43725 (US)
(74) Representative: Robinson, Robert George

(56) References cited:
- EP-A- 0 360 249
- EP-A- 0 425 274
- US-A- 4 369 361

## Description

The present invention relates to an optical scanning apparatus and more particularly to a portable coded symbol scanning apparatus which can be operated in a hand-held mode or fixed, hands free-mode.

In present-day merchandising point-of-sale operations, data pertaining to the purchase of a merchandise item is obtained by reading encoded indicia such as a bar code label printed on or attached to the merchandise item. In order to standardize the bar codes used in various point-of-sales checkout systems, the grocery industry has adopted a uniform product code (UPC) which is in the form of a bar code. Reading systems which have been constructed to read this type of bar code include hand-held wands which are moved across the bar code and stationary optical scanning systems normally located within the cabinet structure of a checkout counter in which the bar code is read when a purchased merchandise item is moved across a window constituting the scanning area of the counter, which movement is part of the process of loading the item in a baggage cart. Where the merchandise consists of soft materials such as clothing, hand-held scanners were found to be ineffective under certain circumstances. A need has arisen for a coded symbol scanning device that combines the advantages of both a hand-held as well as a fixed, hands-free scanner. Such an arrangement is described in US-A-4,766,297 which discloses a scanning device that can be utilized in either a portable mode of operation or a stationary mode of operation. The scanning device includes a portable hand-held scanner and a fixture for receiving and supporting the scanner. The fixture includes a base portion and a head portion interconnected in a spaced apart relationship. When the hand-held scanner is attached to the fixture it can be operated as a fixed, overhead scanning apparatus. A disadvantage of overhead scanners is that it is sometimes difficult to get a valid read, in particular when scanning coded labels attached to soft materials. Also, the lifting of articles to bring them into focus in relation to the scanning light beams may sometimes be uncomfortable.

EP-A-0425274, which constitutes prior art for novelty purposes only under Article 54(3)EPC, discloses a support unit and a detachably mountable hand held bar code scanner. The scanner can be used when mounted in the support unit because the support unit contains a reading window through which the light emitted by the scanner is transmitted. The scanner will be used in this mode when objects to be scanned are small and light and may be passed over the reading window by the user. The scanner can also be used when removed from the support unit, in order to scan heavy or large objects. The support structure further includes mirror means, and holding means for holding the scanner so that, in operation, scanning beams from the scanning device are reflected from the mirror means out of the support structure through the reading window. The reading window lies in the depth of field of the scanner when held in the support structure by the holding means.

It is an object of the present invention to provide a scanning device in which the above disadvantages are alleviated and which allows flexibility in the positioning of a bar code to be read with respect to the scanner.

Thus, according to the invention, there is provided an optical scanning apparatus for reading coded symbols including a hand-held scanning device, and a support structure for supporting said scanning device so as to enable said scanning device to be used in a hands-free mode, said support structure including an exterior transparent plate, mirror means, and holding means for holding said scanning device so that, in operation, scanning beams from said scanning device are reflected from said mirror means out of said support structure through said transparent plate, said transparent plate lying within the depth of field of said scanning device when held by said holding means, wherein that said transparent plate is mounted in said support structure such that when the support structure is mounted on a horizontal surface the transparent plate is upwardly facing and inclined from the horizontal.

It should be apparent that by virtue of the fact that the coded labels are passed in operation over the transparent plate which is in the depth of field of the scanner, more reliable reading may be achieved with the apparatus, even if the coded labels are attached to soft materials.

Other advantages of the apparatus of the present invention are that it is portable, simple in construction and low in cost.

The invention will now be described by way of example with reference to the accompanying drawings wherein like reference numerals indicate like or corresponding parts throughout the several views and wherein:
Fig. 1 is a perspective view of one embodiment of a portable optical bar code scanning apparatus of the present invention showing a multi-line scanning pattern generated by the scanning apparatus;
Fig. 2 is a side view of the optical bar code scanning apparatus of Fig. 1 showing the location of transparent plates through which the scanning pattern is projected, a mirror for reflecting the scanning light beams and the location of the hand-held scanner when positioned on the bar code scanning apparatus;
Fig. 3 is a rear elevational view of the portable bar code scanning apparatus of Fig. 1 showing the location of the entrance transparent plate and a plastic support member for supporting the head of the scanning apparatus;
Fig. 4 is a side elevational view of a second embodiment of a optical bar code scanning apparatus of the present invention which includes a support portion for supporting the hand-held bar code scanning device in contact with the interior of a housing member;
Fig. 5 is a right front perspective view of a third embodiment of a bar code scanning apparatus of the present invention showing the mounting of the hand-held scanner on the housing member;
Fig. 6 is a right front perspective view of a fourth embodiment of a bar code scanning apparatus of the present invention in which the housing member is mounted on a support member for rotation to a plurality of positions;
Fig. 7 is a right rear perspective view of a fifth embodiment of a bar code scanning apparatus of the present invention in which the hand-held scanner is mounted on a separate movable support member which is movable to a position locating the hand-held scanner device adjacent the entrance to the interior of the housing member.

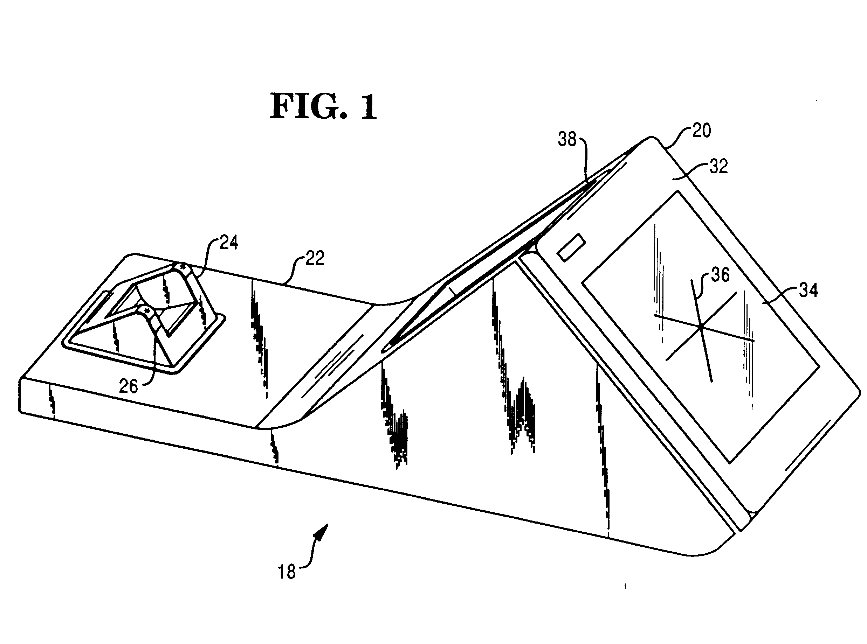

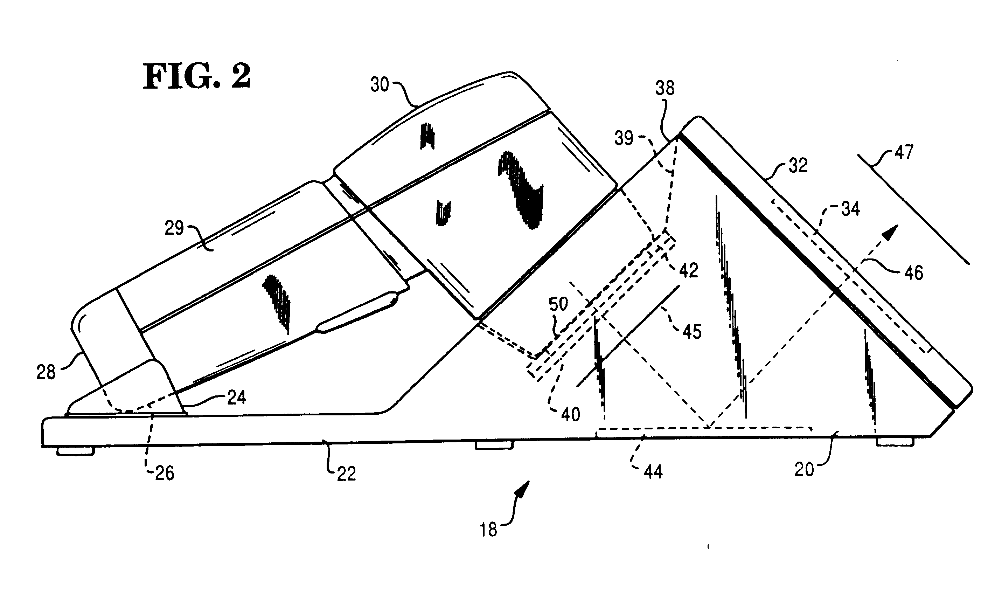

Referring now to Fig. 1, there is shown a perspective view of one embodiment of the bar code scanning apparatus generally indicated by the numeral 18 which comprises a front housing portion 20 and rear housing portion 22 on which is mounted a support member 24 having a cutout portion 26 to accommodate the rear end portion 28 of a hand-held bar code optical scanner 30 (Fig. 2). As best seen from Fig. 2, the front housing portion 20 includes a sloping front surface 32 which includes a transparent plate 34 mounted therein on which is projected a scanning pattern 36 by the hand-held scanner 30.

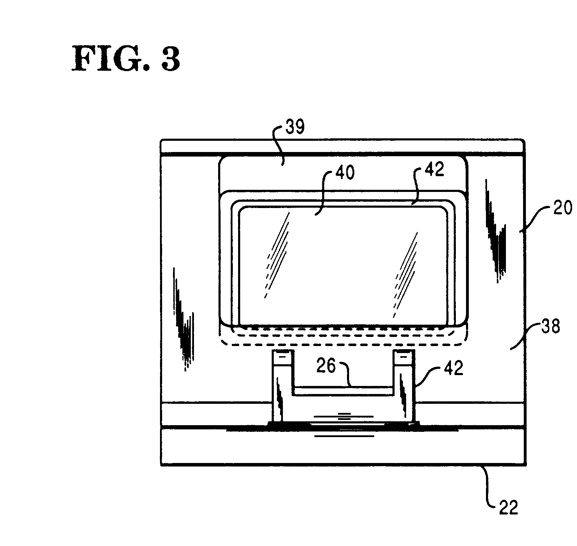

The front housing portion 20 further includes a rear sloping surface 38 (Figs. 1-3 inclusive) in which is mounted an entrance transparent plate member 40 on which is mounted a plastic guard member 42 which is engaged by the face of the hand-held bar code scanner 30 for supporting the weight of the scanner on the front housing portion 20. Mounted adjacent the floor of the housing portion 20 is a mirror 44 which as shown in Fig. 2 reflects scanning light beams projected along the beam axis 46 by the hand-held scanner 30. The scanning light beams in the form of the scanning pattern 36 (Fig. 1) are reflected from the mirror member 44 to be focused on the surface of the exit transparent plate 34 enabling the operator to locate the bar code label which is to be scanned adjacent the scanning pattern 36. The plate 34 may be composed of water white glass while the plate 40 may comprise a glass window. It is obvious that the plate 40 may be omitted entirely without effecting the operation of the scanning apparatus.

One of the controlling factors in designing the angle geometry of the plates 34, 40 and the mirror 44 is the depth of field of the scanning pattern projected by the hand-held scanner 30. It is desirable that the scanning pattern 36 be in focus when projected on the exit transparent plate 34. In the present embodiment, the depth of field of the projected scanning light beams extends from about 25 millimetres in front of the face of the hand-held scanner 30 as indicated by the reference line 45 (Fig. 2) to a point approximately 75 millimetres beyond the face of the exit transparent plate 34 as indicated by the reference line 47 insuring that the bar code label will be scanned when positioned on or adjacent the plate 34. The depth of field may start at the location of the plate 34 which does not restrict the size of the merchandise item which is to be scanned. The angles of the plates 34 and 40 are approximately 45 degrees to the reflective surface of the mirror 44. It is obvious that the plates 34 and 40 may be orientated at different angles to accomplish the projection of the scanning pattern on the surface of the plate 34.

In the operation of the bar code scanning device 18 the operator will cradle the end portion 28 of the handle 29 of the hand-held scanner 30 within the cut-off portion 26 of the support member 24. The operator will then lay the front face portion 50 (Fig. 2) of the scanner 30 onto the plastic insert 42 and turn on the scanner 30 which projects the scanning light beams forming the scan pattern 36 along the beam axis 46 which is reflected from the mirror 44 and is focused on the exit transparent plate 34. In scanning a bar code label, the label is positioned on the surface of the plate 34 and moved across the scanning pattern 36 for reading the bar code label in a manner that is well known in the art.

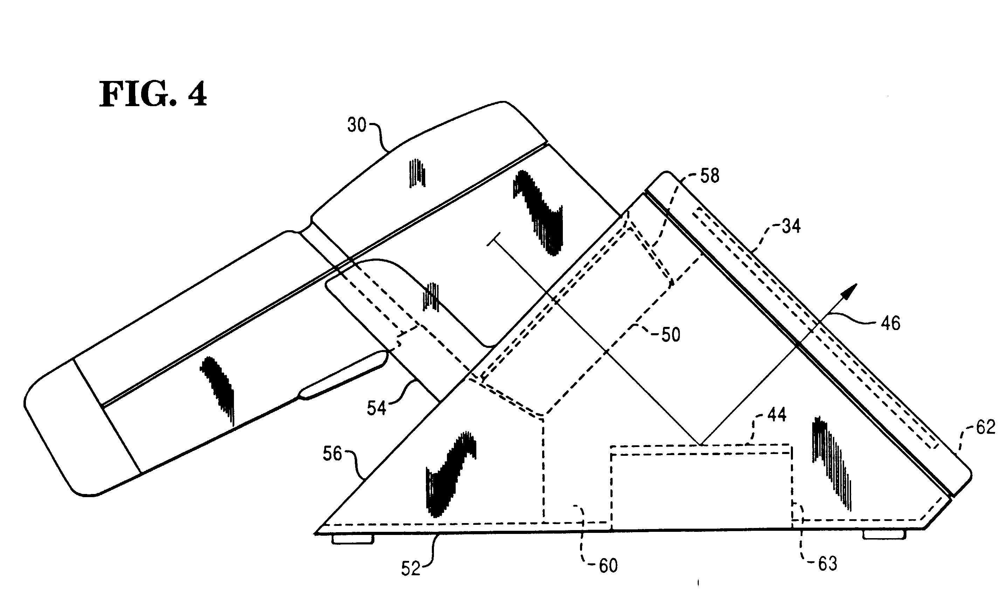

Referring now to Fig. 4, there is shown a second embodiment of the optical bar code scanning apparatus of the present invention which comprises a triangular shaped housing member 52 which includes a saddle type support portion 54 extending from a rear inclined surface 56 of the housing member which also includes a recessed portion 58 opening to the interior 60 of the housing member 52.

Mounted in the front inclined surface 62 of the housing member 52 is the exit transparent plate 34, while mounted on a support member 63 located within the housing member 52 is the reflecting mirror 44 which reflects the scanning light beams projected from the hand-held scanner 30 along the beam axis 46 for projecting the scanning pattern onto the plate 34.

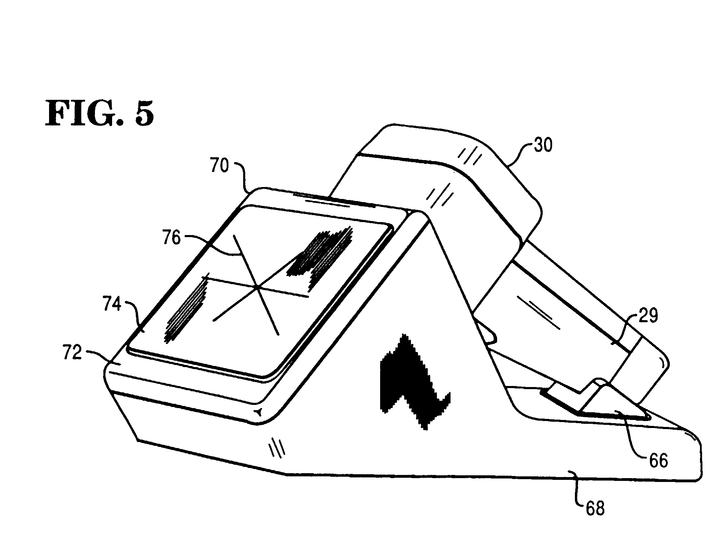

Referring now to Fig. 5, there is shown a front perspective view of a third embodiment of the apparatus of the present invention in which the handle 29 of the hand-held bar code scanner 30 is mounted within a recessed portion 66 located in the rear portion 68 of the housing member 70. Mounted on the front face portion 72 of the housing member 70 is the exit transparent plate 74 which provides a large scanning area on which the scanning pattern 76 is projected.

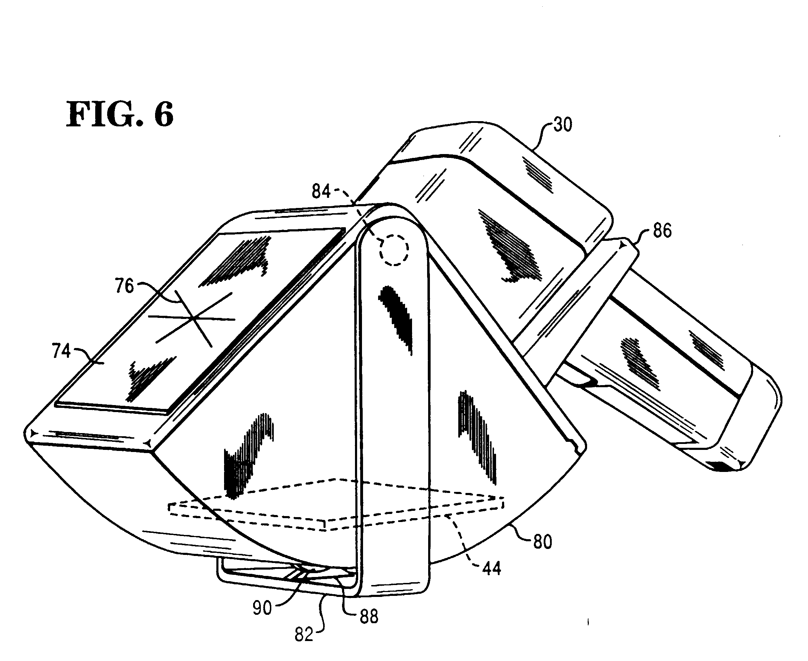

Referring now to Fig. 6, there is shown a right front perspective view of a fourth embodiment of the apparatus of the present invention in which the housing member 80 is arcuately shaped and rotatably mounted on a support member 82 by means of studs 84. Mounted within the housing member 80 is the reflecting mirror member 44 which projects the scan light beams through the exit transparent plate 74 on which is projected the scanning pattern 76. Extending from the rear surface portion of the housing member are a pair of support members 86, one of which is shown in Fig. 6, for supporting the hand-held bar code scanner 30 which is positioned within an aperture (not shown) similar to the aperture 58 (Fig. 4) in the housing 80 or the rear surface arrangement shown in Fig. 2, enabling the bar code scanner to project the scanning light beams towards the reflecting mirror 44 in the manner described previously. Mounted on a support member 88 secured to the support member 82 are a pair of roller members 90 frictionally engaging the lower edge of the housing member 80 for holding the housing member in any rotated position allowing the transparent plate 74 to be moved to a scanning position which is convenient for the operator to scan a bar code label.

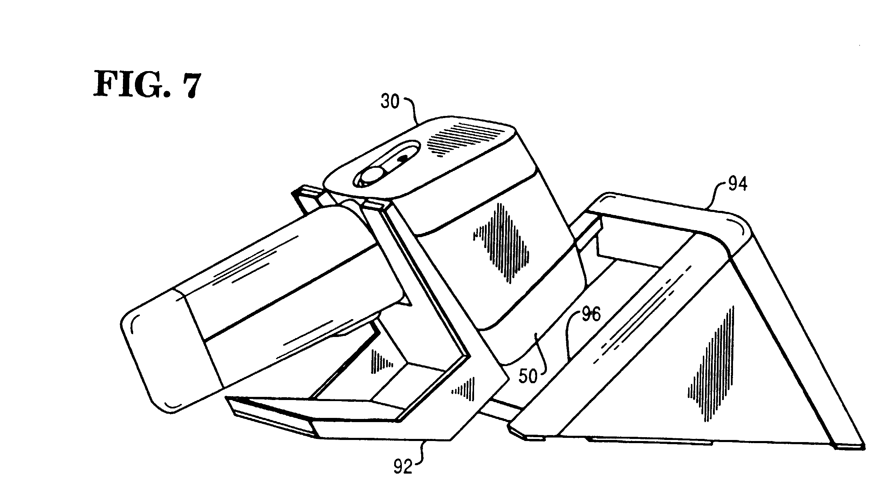

Referring to Fig. 7, there is shown a right rear perspective view of a fifth embodiment of the apparatus of the present invention in which the hand-held scanner 30 is mounted on a movable support member 92 which may be positioned adjacent the free standing housing member 94 which includes a recessed portion 96 within which may be positioned the nose portion 50 of the scanner 30 for projecting light beams in the form of the scanning pattern 36 (Fig. 1) at a reflecting mirror (not shown) in the manner previously described. With this arrangement, the bar code scanner 30 can be moved to a position focusing the scan pattern 36 on the exit transparent plate similar to that of plate 34 in Fig. 2. It will be seen that the present invention provides a portable bar code scanning apparatus which enables the operator to move comfortably a bar code label directly on the transparent plate utilizing both hands to grasp the article on which the bar code label is attached.

## Claims

1. An optical scanning apparatus for reading coded symbols including a hand-held scanning device (30), and a support structure (18) for supporting said scanning device so as to enable said scanning device to be used in a hands-free mode, said support structure (18) including an exterior transparent plate (34), mirror means (44), and holding means (24,58) for holding said scanning device (30) so that, in operation, scanning beams (36) from said scanning device are reflected from said mirror means (44) out of said support structure (18) through said transparent plate (34), said transparent plate lying within the depth of field of said scanning device (30) when held by said holding means (24, 58), wherein that said transparent plate (34) is mounted in said support structure (18) such that when the support structure (18) is mounted on a horizontal surface the transparent plate (34) is upwardly facing and inclined from the horizontal.

2. An apparatus according to claim 1, characterized in that said scanning light beams (36) are projected on to said mirror means (44) at an angle of 45 degrees.

3. An apparatus according to either claim 1 or claim 2, characterized in that said hand-held scanning device (30) has a nose portion (50) and in that said support structure (18) has a recessed portion (58) as part of said holding means (24,58) shaped to accommodate said nose portion (50).

4. An apparatus according to claim 3, characterized in that said support structure (18) has an extending base portion (22) including a cut-out portion (66) to accommodate part of a handle (29) of said hand-held scanning device (30).

5. An apparatus according to claim 3, characterized by a saddle type support means (54,86) mounted on said support structure (18) for holding the nose portion (50) of said hand-held scanning device (30) in said recessed portion (58).

6. An apparatus according to claim 1, characterized in that said support structure includes an accurately shaped housing member (80) rotatably mounted on an upright support (82) having friction means (88,90) mounted thereon and arranged to engage said housing member (80) for holding the housing member (80) in a plurality of rotational positions.

7. An apparatus according to claim 3, characterized in that said support structure includes a support member (92) for said hand-held scanning device and a housing member (94) separate from said support member (92) and including said transparent plate (34) and said recessed portion (96), said support member (92) being movable relative to said housing member (94) to position said nose portion (50) within said recessed portion (96) of said housing member (94).

8. An apparatus according to any one of the preceding claims, characterized in that said support structure (18) is portable.

## Patentansprüche

1. Optischer Abtastapparat zum Lesen von verschlüsselten Symbolen, mit einer handgeführten Abtastvorrichtung (30) und einem Traggestell (18) zum Abstützen der Abtastvorrichtung, um die Abtastvorrichtung in die Lage zu versetzen, in einem Freihandmodus eingesetzt zu werden, wobei das Traggestell (18) eine lichtdurchlässige Außenplatte (34), eine Spiegeleinrichtung (44) und Haltemittel (24, 58) zum Halten der Abtastvorrichtung (30) aufweist, so daß im Betrieb von der Abtastvorrichtung ausgehende Abtaststrahlen (36) von der Spiegeleinrichtung (44) durch die lichtdurchlässige Platte (34) hindurch aus dem Traggestell (18) herausreflektiert werden, wobei die lichtdurchlässige Platte innerhalb der Schärfentiefe der Abtastvorrichtung (30) liegt, wenn diese durch die Haltemittel (24, 58) gehalten ist, wobei die lichtdurchlässige Platte (34) so in dem Traggestell (18) befestigt ist, daß die lichtdurchlässige Platte (34) bei Anbringung des Traggestells (18) auf einer waagerechten Fläche nach oben zeigt und von der Horizontalen weggeneigt ist.

2. Apparat nach Anspruch 1, dadurch gekennzeichnet, daß die Abtastlichtstrahlen (36) in einem Winkel von 45° auf die Spiegeleinrichtung (44) projiziert werden.

3. Apparat nach Anspruch 1 oder Anspruch 2, dadurch gekennzeichnet, daß die handgeführte Abtastvorrichtung (30) einen vorstehenden Abschnitt (50) aufweist und daß das Traggestell (18) einen vertieften Abschnitt (58) als Teil der Haltemittel (24, 58) aufweist, der zur Aufnahme des vorstehenden Abschnitts (50) ausgeformt ist.

4. Apparat nach Anspruch 3, dadurch gekennzeichnet, daß das Traggestell (18) ein verbreitertes Unterteil (22) mit einem Stufenabschnitt (66) zur Aufnahme eines Teiles eines Handgriffs (29) der handgeführten Abtastvorrichtung (30) aufweist.

5. Apparat nach Anspruch 3, gekennzeichnet durch eine sattelartige Auflagevorrichtung (54, 86), die auf dem Traggestell (18) befestigt ist, um den vorstehenden Abschnitt (50) der handgeführten Abtastvorrichtung (30) in dem vertieften Abschnitt (58) zu halten.

6. Apparat nach Anspruch 1, dadurch gekennzeichnet, daß das Traggestell ein genau geformtes Gehäuseelement (80) aufweist, das drehbar auf einer Hochkant-Halterung (82) mit einer darauf befestigten Reibungseinrichtung (88, 90) gelagert ist, die so angeordnet ist, daß sie mit dem Gehäuseelement (80) in Eingriff geht, um das Gehäuseelement (80) in einer Vielzahl von Drehstellungen zu halten.

7. Apparat nach Anspruch 3, dadurch gekennzeichnet, daß das Traggestell ein Abstützelement (92) für die handgeführte Abtastvorrichtung und ein Gehäuseelement (94) aufweist, das von dem Abstützelement (92) getrennt ist und die lichtdurchlässige Platte (34) und den vertieften Abschnitt (96) aufweist, wobei das Abstützelement (92) bezüglich des Gehäuseelementes (94) beweglich ist, um den vorstehenden Abschnitt (50) innerhalb des vertieften Abschnitts (96) des Gehäuseelementes (94) zu positionieren.

8. Apparat nach einem der vorhergehenden Ansprüche, dadurch gekennzeichnet, daß das Traggestell (18) tragbar ist.

## Revendications

1. Un appareil de balayage optique pour lire les symboles codés, comportant un dispositif de balayage à main (30), et une structure de support (18) pour supporter ledit dispositif de balayage de façon à permettre l'utilisation dudit dispositif de balayage en mode mains libres, ladite structure de support (18) comportant une plaque transparente extérieure (34), un moyen miroir (44), et un moyen de maintien (24, 58) pour maintenir ledit dispositif de balayage (30) de façon à ce que, lors du fonctionnement, les faisceaux de balayage (36) dudit dispositif de balayage soient réfléchis à partir dudit moyen miroir (44) hors de ladite structure de support (18) à travers ladite plaque transparente (34), ladite plaque transparente étant située dans la profondeur de champ dudit dispositif de balayage (30) lorsqu'il est maintenu par ledit moyen de maintien (24, 58), dans quoi cette dite plaque transparente (34) est montée dans ladite structure de support (18) de façon à ce que, lorsque la structure de support (18) est montée sur une surface horizontale, la plaque transparente (34) soit tournée vers le haut et inclinée par rapport à l'horizontale.

2. Un appareil conformément à la revendication 1, caractérisé en ce que lesdits faisceaux lumineux de balayage (36) sont projetés sur ledit moyen miroir (44) à un angle de 45 degrés.

3. Un appareil conformément à la revendication 1 ou à la revendication 2, caractérisé en ce que ledit dispositif de balayage à main (30) a une partie nez (50) et en ce que ladite structure de support (18) a une partie en retrait (58) faisant partie dudit moyen de maintien (24, 58) façonnée pour recevoir ladite partie nez (50).

4. Un appareil conformément à la revendication 3, caractérisé en ce que ladite structure de support (18) a une partie base en saillie (22) comportant une partie découpée (66) pour recevoir une partie d'une poignée (29) dudit dispositif de balayage à main (30).

5. Un appareil conformément à la revendication 3, caractérisé par un moyen de support de type selle (54, 86) monté sur ladite structure de support (18) pour maintenir la partie nez (50) dudit dispositif de balayage à main (30) dans ladite partie en retrait (58).

6. Un appareil conformément à la revendication 1, caractérisé en ce que ladite structure de support comporte un élément logement de forme curviligne (80) monté, de façon à pouvoir tourner, sur un support vertical (82) comportant un moyen de friction (88, 90) arrangé pour engager ledit élément logement (80) pour maintenir l'élément logement (80) dans une pluralité de positions rotatives.

7. Un appareil conformément à la revendication 3, caractérisé en ce que ladite structure de support comporte un élément de support (92) pour ledit dispositif de balayage à main et un élément logement (94) séparé dudit élément de support (92) et comportant ladite plaque transparente (34) et ladite partie en retrait (96), ledit élément de support (92) étant mobile relativement audit élément logement (94) pour positionner ladite partie nez (50) dans ladite partie en retrait (96) dudit élément logement (94).

8. Un appareil conformément à l'une quelconque des revendications précédentes, caractérisé en ce que ladite structure de support (18) est portable.
